# EUROPEAN PATENT APPLICATION

(11) **EP 4 734 021 A1**
(43) Date of publication of application: **29.04.2026**
(21) Application number: 25210331.2
(22) Date of filing: 22.10.2025
(51) Int. Cl.: G06Q 10/0833

(54) **GLOBAL TRACKING DEVICE AND SYSTEM FOR LOGISTICS**

(30) Priority: 28.10.2024 IT 202400023997
(71) Applicant: Bizclap S.r.l., 10141 Torino (IT)
(72) Inventor: DI STEFANO, Roberto, 10141 Torino (IT)
(74) Representative: Bruni, Giovanni

(57) **Abstract**

*Global tracking device (10) for logistics processes related to vehicles, the device being configured to implement and execute algorithms, the algorithms comprising:*
*- an algorithm for high connectivity tracking,*
*- an algorithm for calculating the fastest and most sustainable route to reach the vehicles,*
*- an algorithm for automatically updating the position of the vehicles at predetermined frequencies.*

## Description

### Technical Field of the Invention

The present invention relates to a device usable in global logistics tracking systems and to the related global tracking system. Specifically, the invention is applicable to alert and tracking systems adaptable to the vehicle logistics sector, such as electric or internal combustion engine vehicles.

### Background Art

Vehicle logistics involves various phases of vehicle distribution: storage in production facilities; land, rail, or sea transport; storage in intermediate areas between different transport routes; storage at distributors; and allocation to end users.

Therefore, a technological system capable of addressing the challenges of logistics operators is essential, particularly regarding the efficient tracking, management, and coordination of vehicles.

Existing global logistics tracking systems cannot accurately address all logistics operators' challenges.

More specifically, the main issues to be addressed and resolved can be summarized as follows. In land logistics, fleet management involves a series of technical and logistical challenges:
- Position monitoring
- Verification of unexpected movements
- Immediate visual identification
- Liability for damage to vehicles.

In the maritime sector, managing operations is more challenging:
- preparing loading queues
- completing the bill of lading
- identifying the last vehicle operator
- optimal vehicle picking route.

Therefore, there is a need to find a solution able to solve or at least minimizes the aforementioned drawbacks.

### Summary of the Invention

To substantially solve the technical problems highlighted above, the solution proposed by this invention is the development of a device for global tracking systems usable by logistics operators and the associated global tracking system. The device can be used in alert and tracking systems adaptable to the vehicle logistics sector (warehousing, transportation, etc.), both within individual logistics branches and across the entire logistics flow.

The present invention therefore relates to the field of vehicle logistics management, particularly the monitoring and localization of vehicles within single or multiple branches of the supply chain.

Therefore, according to the present invention, a device for global tracking systems for vehicle logistics is provided having the features set forth in the independent device claim, appended to this specification.

According to another object, a global tracking system is provided having the features set forth in the independent system claim, appended to this specification.

Further preferred and/or particularly advantageous embodiments of the invention are described according to the features set forth in the appended dependent claims.

### Brief Description of the Drawings

The invention will now be described with reference to the accompanying drawings, which illustrate some non-limiting examples of its implementation, in which:
- Figure 1 is a diagram of the logistics flow using the tracking device, and
- Figure 2 is a diagram of the global tracking system according to the present invention, which system includes the tracking device of Figure 1.

### Detailed Description

By way of example and not limitation, the present invention will now be described with reference to the aforementioned figures.

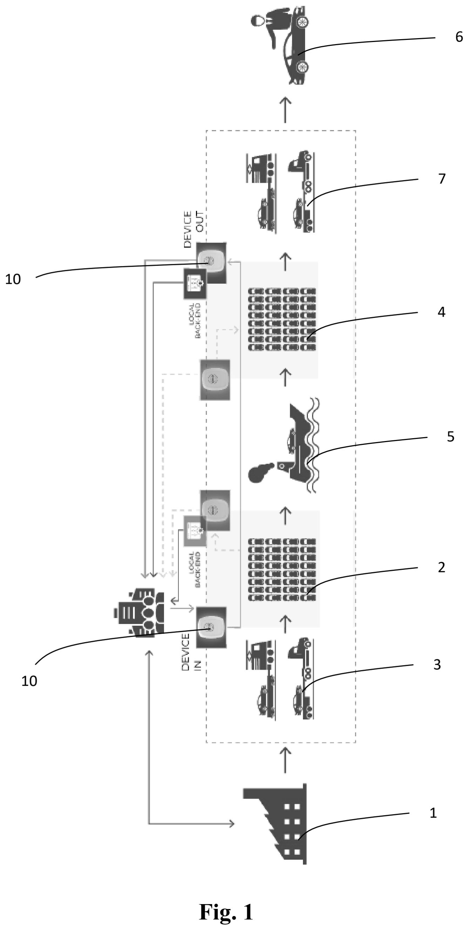

With reference to Figure 1, a typical logistics process applied to vehicle transport may involve the following phases:
- management of vehicle transport from the production site 1 to a first storage area 2 by means of an initial land transport 3 by road and/or rail,
- management of vehicle transport from the first storage area 2 to a second storage area 4 by means of maritime transport 5,
- management of vehicle transport from the second storage area 4 to a dealer/end user 6 by means of a second land transport 7 by road and/or rail.

One or more of these phases, or preferably the entire logistics process, is managed by the logistics division 30 using at least one device 10 according to the present invention. This is a tracking device designed to monitor the position of vehicles within confined perimeters, and its innovative potential is realized when integrated into a global tracking system.

The technological system that integrates the tracking device with local and remote connection infrastructures provides operators using the system with greater information and intervention capabilities.

The device and its associated global tracking system according to the present invention are suitable for use within restricted logistics areas. They can be connected to a local back-end network (a network capable of processing the data provided by the device) and are easy to attach and remove from vehicles.

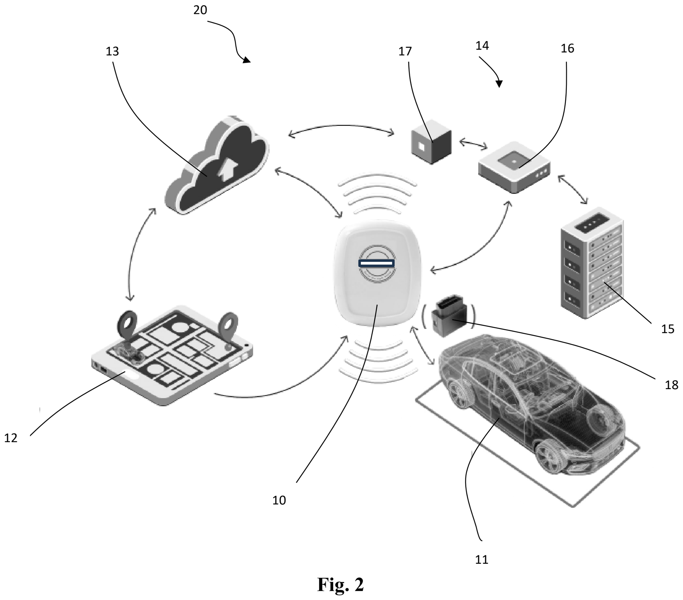

With reference to Figure 2, the global tracking system 20, according to the present invention, comprises a plurality of devices 10, preferably located within corresponding vehicles 11 involved in the logistics process. Each device 10 is capable of communicating, through software that can be integrated with various types of hardware, tracking data from the vehicle 11 to other components of the global tracking system 20:
- a logistics operator's hardware 12, such as a handheld device capable of connecting to the device 10,
- a local back-end network 13. For example, an autonomous data transmission network, powered by associated batteries, of very compact dimensions and integrable with other systems,
- a connection infrastructure 14, preferably based on LoRa technology, an acronym for long-range telecommunications technology, better known as LoRaWAN (Low Power Wide Area Network). Infrastructure 14 may include, for example, a server 15, a gateway 16, a device connecting two different types of computer networks, and a plurality of nodes 17.

Advantageously, system 20 could also include a connector 18 physically connected to the vehicle's OBD port and to device 10. In this case, each device 10 will be equipped with an additional algorithm capable of acquiring and transmitting vehicle data from its OBD port.

Device 10 is a very compact object. For example, its footprint can be 60mm x 80mm. It also features:
- a high-connectivity tracking algorithm. It combines high connectivity capabilities and technologies for effective communication,
- an algorithm for calculating the optimal route, i.e., the fastest and most sustainable route to reach vehicles,
- a position update algorithm with the option to update the position or set automatic updates at different frequency intervals.

Advantageously, Device 10 also features:
- one or more batteries with long battery life before requiring charging, thus allowing for optimal energy management,
- Smalware and controller for integrating technological and mechanical components for wired and/or inductive charging,
- a temperature sensor for measuring the vehicle's internal temperature and triggering alarms when a predetermined critical threshold is exceeded.

The flow of information in the global tracking system 20 may include:
- inputs and requests from hardware 12 to device 10. For example, lighting inputs to device 10 or requests for position updates,
- exchange of historical and positioning data between hardware 12 and the local back-end network 13. For example, requesting information related to the vehicle and its last detected position from a database located in the local back-end network 13,
- exchange of vehicle and alarm data between the local back-end network 13 and the connection infrastructure 14. For example, verifying the vehicle's exit from the "geofencing" perimeter. As is well known, the term "geofencing" literally means "virtual fence" and is a special virtual perimeter based on a predetermined position. It therefore allows verification of whether a vehicle exits a virtual boundary circumscribed within a specific geographical area, known as a "geofence."

Therefore, the global tracking system 20 enables:
a) vehicle position monitoring with the following data:
   - automatic daily position detection,
   - automatic position detection following vehicle movement,
   - position detection on request
b) vehicle identification through device 10 illumination,
c) identification of the last vehicle operator with:
   - movement detection,
   - movement history
d) automatic recording of device 10's passage between different phases of the logistics process,
e) delivery of devices to "RFID Boxes" for automatic calculation of the number of devices and corresponding vehicles,
f) definition of the virtual perimeter for geofencing activities to prevent device loss,
g) route calculation for vehicle retrieval within confined storage perimeters,
h) integration of devices into mobile carts for optimal insertion into the corresponding vehicles.

The global tracking system 20 can include numerous architectures that can be adapted to specific needs and applications. Examples of possible hardware/software components, communication protocols, and data models are provided below.

The hardware components include:
a) devices 10. These devices may be:
   - vehicle locators, configured for daily sampling, acquisition of position, time, and other relevant data;
   - operator locators, configured for more frequent sampling to monitor the operator's movements more precisely.
b) possible connector 18 for physical interface with the OBD port and device 10;
c) communication devices. These include:
   - LoRaWAN gateways to facilitate communication between devices and the local back-end network 13,
   - WiFi access points installed to adequately cover the logistics operations area,
   - 4G routers to ensure internet connectivity for data transmission to the local back-end network 13
d) customer-specific equipment, such as RFID delivery boxes used to pair/unpair vehicles and operators, recording interactions with RFID tags.

In addition to the LoRa protocol, used for low-power, long-range communication between devices and the gateway, Modbus/TCP, BacNet/TCP, and Haystack are also supported for further data integration and control.

The following data models can be used:
- Device data 10. This data, for example, includes the device ID, timestamp, latitude, longitude, temperature, battery status, and inclination to monitor the status and location of vehicles and operators.
- RFID Box data. This data is used to capture the time, device ID, vehicle identification number, and pairing and/or unpairing events.

The software components relate to the backend management system (BMS) and the frontend management system (FMS). Specifically, the BMS includes:
- a local management system instance: manages local data processing and storage, providing real-time analysis and monitoring capabilities across the complex,
- a cloud management system instance: serves as a central repository for all collected data, enabling remote access, advanced data analysis, and integration with other enterprise systems.

The FMS includes a web interface. This intuitive interface allows monitoring fleet status, operator movements, and interaction with RFID delivery boxes. The interface will support real-time data visualization and historical data analysis.

Ultimately, the invention described offers numerous advantages. Without a connection to the vehicle's OBD data port, or without any physical connection to the vehicle or in-vehicle data, the system is ideal for locating vehicles within specific logistics routes, with the option of remotely activating the device's light identification. This is achieved through dynamic and continuous tracking within each logistics route and connection to the local back-end network for data access.

Connecting to in-vehicle data, via a physical connection to the OBD port, a cable connector, or Bluetooth to the main device, significantly improves the safety of electric vehicles. Indeed, the system is ideal for the entire end-to-end logistics flow and/or for specific routes, for tracking vehicles, monitoring safety parameters, and ensuring optimal conditions for logistics operations. This is achieved by monitoring critical logistics parameters, providing dynamic and continuous tracking throughout the end-to-end logistics process, and, of course, connecting to the local back-end network for data access.

In addition to the embodiment of the invention, as described above, it should be understood that numerous other variations exist. It should also be understood that such embodiments are only exemplary and do not limit either the scope of the invention, nor its applications, nor its possible configurations. On the contrary, although the description above allows the person skilled in the art to implement the present invention at least according to one of its exemplary embodiments, it should be understood that many variations of the described components are possible, without thereby departing from the scope of the invention, as defined in the appended claims, which are interpreted literally and/or according to their legal equivalents.

## Claims

1. Global tracking device (10) for logistics processes related to vehicles, the device being configured to implement and execute algorithms, the algorithms comprising:
- an algorithm for high connectivity tracking,
- an algorithm for calculating the fastest and most sustainable route to reach the vehicles,
- an algorithm for automatically updating the position of the vehicles at predetermined frequencies.

2. Device (10) according to claim 1, further comprising a further algorithm for acquiring and transmitting vehicle data from its OBD socket.

3. Device (10) according to claim 1 or 2, further comprising;
- one or more batteries with long autonomy,
- "smalware" controller for integrating technological and mechanical parts used for charging via cable and/or induction,
- a temperature sensor for measuring the internal temperature of the vehicles and for launching alarms when a predetermined critical temperature threshold is exceeded.

4. Device (10) according to anyone of the preceding claims, wherein the device is located inside a corresponding vehicle subject to the logistics process.

5. Device (10) according to anyone of the preceding claims, the device having plan dimensions of 60mm x 80mm.

6. Device (10) according to anyone of the preceding claims, wherein the device is configured to:
- localize vehicles, acquiring position and time by daily sampling,
- localize an operator, with more frequent sampling to precisely monitor the operator's movements.

7. Global tracking system (20) for logistics processes relating to vehicles, the system comprising a plurality of devices (10) according to anyone of the preceding claims configured to communicate tracking data of the vehicle (11) to other components of the global tracking system (20), including:
- a hardware (12) of a logistics operator,
- a local back-end network (13),
- a connection infrastructure (14).

8. Global tracking system according to claim 7, the system comprising a connector (18) physically connected to the OBD socket of the vehicle and to the device (10).

9. Global tracking system (20) according to claim 7 or 8, wherein the connection infrastructure (14) is based on LoRa technology.

10. Global tracking system (20) according to anyone of claims 7 to 9, wherein the connection infrastructure (14) comprises a server (15), a gateway (16), a device for connecting two computer networks of different types, and a plurality of nodes (17).
